# EUROPÄISCHE PATENTANMELDUNG

(11) **EP 1 213 117 A1**
(43) Veröffentlichungstag der Anmeldung: **12.06.2002**
(21) Anmeldenummer: 01128587.1
(22) Anmeldetag: 30.11.2001
(51) Int. Cl.: B29C 43/02, B29C 43/18

(54) **Verfahren zur Herstellung eines Bauteils aus Bernstein sowie ein Bauteil aus Bernstein**

(30) Priorität: 08.12.2000 DE 10061206
(71) Anmelder: DaimlerChrysler AG, 70567 Stuttgart (DE)
(72) Erfinder: Schlösser, Thomas, 89155 Erbach (DE); Skrzypek, Uwe, 71297 Mönsheim (DE); Lorenz, Kay, 30161 Hannover (DE)

(57) **Zusammenfassung**

Im Fahrzeugbau und in vielen anderen technischen Anwendungsbereichen erfordern immer neue technische Anforderungen einerseits und der Kundenwunsch nach Abwechslung eine ständige Suche nach neuen Werkstoffen.

Die Aufgabe der vorliegenden Erfindung besteht daher einerseits darin, möglichst preiswerte Bauteile, speziell Fahrzeugbauteile, aus einem bisher nicht hierfür eingesetzten Werkstoff anzugeben, die sowohl gute technische als auch dekorative Eigenschaften aufweisen, und andererseits besteht die Aufgabe darin, ein wirtschaftliches Verfahren für deren Herstellung anzugeben.

Die Aufgabe wird gelöst, durch die Verwendung von Bernstein als Bauteilwerkstoff und durch ein Verfahren, bei dem zunächst ein Halbzeug aus Bernstein hergestellt wird, und dann das Halbzeug in eine dreidimensionale Form umgeformt wird.

## Beschreibung

Die Erfindung betrifft ein Verfahren zur Herstellung eines Bauteils aus Bernstein sowie ein Bauteil aus Bernstein gemäß der Oberbegriffe der Patentansprüche 1, 9 und 10.

Bernstein wird bereits seit Jahrtausenden als Schmuck verwendet. Als Glas noch nicht rein genug herzustellen war, wurden auch Brillen und Lupen aus Bernstein geschliffen. Die Formgebung erfolgte ausschließlich durch spanende Bearbeitung aus dem Vollen. Aufgrund der beschränkten Größe der natürlichen Funde wurde bereits 1879 ein Verfahren zur Herstellung von Preßbernstein entwickelt, bei dem kleine natürliche Bernsteinstücke unter Luftabschluß in eine beheizte Druckkammer eingebracht und dann unter hohem Druck durch ein Sieb gedrückt werden, wobei einzelne Stränge entstehen, die miteinander verbunden werden. Dies ermöglicht die Herstellung von vergleichsweise großflächigen Platten und Stäben ohne Zusatz von Bindemitteln, die dann spanend weiterverarbeitet werden [1, 2, 3]. Diese Methode ist jedoch kostenintensiv und nur für die Produktion geringer Stückzahlen von exklusiven Schmuck und Ziergegenständen geeignet, nicht jedoch für die Herstellung hoher Stückzahlen von Gebrauchsgegenständen.

Neben dem rein dekorativen Einsatz in der Schmuckindustrie wurde Bernstein in der DDR auch in Form von elektrischen Isolatoren für Radio- und Fernsehgeräte eingesetzt [1].

Im Fahrzeugbau und in vielen anderen technischen Anwendungsbereichen erfordern immer neue technische Anforderungen einerseits und der Kundenwunsch nach Abwechslung eine ständige Suche nach neuen Werkstoffen.

Die Aufgabe der vorliegenden Erfindung besteht daher einerseits darin, möglichst preiswerte Bauteile, speziell Fahrzeugbauteile, aus einem Werkstoff anzugeben, die sowohl gute technische als auch dekorative Eigenschaften aufweisen, und andererseits besteht die Aufgabe darin, ein wirtschaftliches Verfahren für deren Herstellung anzugeben.

Die Erfindung ist in Bezug auf zu schaffende Verfahren durch die Merkmale des Patentanspruchs 1 wiedergegeben. Die weiteren Ansprüche enthalten vorteilhafte Ausgestaltungen und Weiterbildungen des erfindungsgemäßen Verfahrens (Patentansprüche 2 bis 8) sowie das zu schaffende Bauteil (Patentansprüche 9-11).

Der erfindungsgemäße Werkstoff ist Bernstein, welcher bisher im Fahrzeugbau nicht eingesetzt wurde. Für andere Anwendungsbereiche wurden Bauteile aus Bernstein bisher nur durch spanende Bearbeitung aus dem Vollen von Natur- oder Preßbernstein hergestellt. Diese Methode ist für große Stückzahlen jedoch unwirtschaftlich.

Das erfindungsgemäße Verfahren liefert eine wirtschaftliche Lösung zur kostengünstigen Produktion von Bauteilen aus Bernstein, in dem zunächst ein, vorzugsweise plattenförmiges, Halbzeug aus Bernstein hergestellt wird und dieses dann in eine gewünschte dreidimensionale Form umgeformt wird. Dabei bleibt die ursprüngliche Struktur des Bernsteins erhalten, insbesondere Phasengrenzen. Auch sind keinerlei Zusätze von Bindemitteln oder sonstige chemische Zusätze erforderlich, so daß werbewirksam von einem Bauteil, insbesondere Fahrzeugbauteil, aus einem rein natürlichem Werkstoff gesprochen werden kann.

Das erfindungsgemäße kostengünstige Verfahren macht den Einsatz des Werkstoffes Bernstein in der Serienfertigung überhaupt erst wirtschaftlich vertretbar und damit möglich und läßt so auch die Ausnutzung von positiven Eigenschaften zu, die in seinen bisherigen Anwendungsbereichen der Schmuckindustrie nicht oder nur von geringer Bedeutung waren.

Beispielsweise ist es jetzt möglich und wirtschaftlich vertretbar, Bernsteins als Werkstoff für Gebrauchsgegenstände, insbesondere für Fahrzeugbauteile, einzusetzen:
- Gehäuse und Abschirmungen aus Bernstein nutzen ihn als elektrischen Isolator, als besonderer Vorteil wird gleichzeitig die elektromagnetischen Verträglichkeit (EMV) gewährleistet.
- Verkleidungen lassen sich aus Bernstein fertigen, sie sind formbeständig und polierbar. Glatte und glänzende feste Oberflächen sind ohne Lackierung herstellbar.
- Armaturentafeln aus Bernstein sind chemisch beständig gegenüber üblichen Reinigungsmitteln. Die Oberfläche ist nicht porös, d.h. sie nimmt keine anderen Medien auf und ist somit leicht zu reinigen.
- Taster, Knöpfe und andere Betätigungsvorrichtungen aus Bernstein besitzen gute physiologische Eigenschaften, sie sind antibakteriell und antiallergen.
- Beleuchtungsmittel aus Bernstein, insbesondere Lampangehäuse, liefern ein "warmes", wohltuendes und nicht störendes oder ablenkendes Licht, da Bernstein mäßige Transparenz besitzt und matt durchscheinend ist.
- Funktionelle Gegenstände aus Bernstein sind auch dekorativ.

Unter Umformen ist erfindungsgemäß jegliches Fertigen durch plastisches Ändern der Form eines festen Körpers unter im wesentlichen Erhaltung von Masse und Stoffzusammensetzung zu verstehen, wie es beispielsweise in den DIN 8582 bis 8587 beschrieben ist. Derartige Umformverfahren sind bei der Herstellung großer Stückzahlen deutlich wirtschaftlicher als die bekannten spanenden Verfahren.

Besonders vorteilhaft ist hier das Pressen zu nennen, insbesondere das Warmpressen. Für die Herstellung massiverer Bauteile wie Schalter oder Knöpfe ist jedoch auch ein Formpreßverfahren mittels Tauchkantenwerkzeugen vorteilhaft.

Auch geeignet ist das Thermoformen, bei dem der Bernstein zunächst durch Erwärmung erweicht und dann mittels Druck, beispielsweise Luftdruck, umgeformt wird. Als spezielles Verfahren ist hier das sog. Diaphragmaformen zu nennen. Dabei wird ein, vorzugsweise plattenförmiges, Halbzeug zwischen zwei elastische Membranen, die sog. Diaphragmen, gelegt, deren Zwischenraum evakuiert wird. Das Halbzeug wird bis zur Erweichung erwärmt und dann mitsamt Diaphragma in ein Umformwerkzeug eingebracht. Dieses besteht vorzugsweise nur aus einer Werkzeughälfte, die eine Temperatur unterhalb der Erweichungstemperatur des Werkstoffes hat. Diphragma und erweichtes Halbzeug werden mittels Druckluft in die Werkzeughälfte gepresst und das Halbzeug kühlt unter Formzwang und isostatischen Druck ab. Vorteilhaft ist hierbei, daß Halbzeuge mit unterschiedlichsten Dicken in einem Werkzeug verarbeitet werden können aber auch, daß nur eine Werkzeughälfte benötigt wird.

In einer vorteilhaften Ausführungsform des erfindungsgemäßen Verfahrens wird an das umgeformte Halbzeug, vorzugsweise einseitig und großflächig, ein Beleuchtungsmittel, vorzugsweise eine Luminiszenzfolie, angebracht. Die beschränkte Transparenz des Bernsteins liefert ein "warmes" Licht, welches insbesondere bei einem Einsatz im Fahrzeugbereich zwar beleuchtet aber nicht als störend oder ablenkend empfunden wird.

In einer weiteren vorteilhaften Ausführungsform des erfindungsgemäßen Verfahrens wird das Halbzeug während der Umformung durch einen Pressvorgang auf eine Trägerfolie, beispielsweise aus Holz, Papier, Metall oder Kunststoff, aufgebracht, vorzugsweise kaschiert. Die Kaschierung erhöht die Stabilität und erlaubt so die Herstellung dauerhaft beständiger sehr großflächiger oder großvolumiger Bauteile bei minimalem Einsatz des wertvollen Werkstoffes Bernstein.

In einer weiteren vorteilhaften Ausführungsform des erfindungsgemäßen Verfahrens wird das umgeformte Halbzeug zumindest partiell lackiert. Damit wird die Beständigkeit höher beanspruchter Bereiche der Bauteiloberfläche erhöht.

Die Aufgabe wird bezüglich des zu schaffenden Bauteils erfindungsgemäß dadurch gelöst, daß es oder mindestens eine Komponente hergestellt wurde nach einem der vorstehenden Verfahren.

Die bekannten Verfahren ermöglichen nur die wirtschaftliche Herstellung von Platten, Stäben oder anderer Körper einfacher Geometrie in größeren Stückzahlen. Bauteile komplexerer Geometrie müssen kostenintensiv aus dem Vollen gefräßt werden. Ein nach dem erfindungsgemäßen Verfahren hergestelltes Bauteil ist jedoch gerade bei der Herstellung großer Stückzahlen preiswert, und erlaubt deshalb, den bisher nicht dafür eingesetztem Werkstoff Bernstein zu verwenden, der sowohl gute technische als auch dekorative Eigenschaften aufweist. Insbesondere können auch Abfall und Ausschuß der Schmuckindustrie sowie sehr kleine oder schlecht geformte Naturprodukte zu Preßbernstein-Halbzeugen verarbeitet und danach erfindungsgemäß zu Gebrauchsgegenständen umgeformt werden.

Die Aufgabe wird bezüglich des zu schaffenden Fahrzeug-Bauteils erfindungsgemäß dadurch gelöst, daß es oder mindestens eine Komponente aus Bernstein besteht.

Der Werkstoff Bernstein wurde bisher gar nicht im Fahrzeugbereich eingesetzt. Er besitzt jedoch die vorstehend genannte große Anzahl geeigneter technischer und dekorativer Eigenschaften, die diesen Einsatz sinnvoll machen.

Kleine Bauteile in kleiner Stückzahl können hierzu auch nach bekannten Verfahren aus dem vollen Natur- oder Preßbernstein mittels spanender Bearbeitung gefertigt werden.

Größere Bauteile oder deren Komponenten, insbesondere mit komplexerer Geometrie, können in wirtschaftlicher weise nach dem erfindungsgemäßen Verfahren mit den vorstehend genannten Vorteilen gefertigt werden.

Das erfindungsgemäße Verfahren erweist sich als besonders geeignet für die wirtschaftliche Herstellung von erfindungsgemäßen Bauteilen komplexer dreidimensionaler Geometrie. Als Beispiele aus dem Fahrzeugbereich sind beispielhaft Armaturentafeln oder Verkleidungsteile zu nennen. In anderen Anwendungsbereichen ist es zum Beispiel für die Herstellung von Gehäusen geeignet, zum Beispiele für Telefone oder Monitore.

Als erfindungsgemäße Fahrzeug-Bauteile sind aber auch kleinere Bauteile einfacher Geometrie aufzuzählen, beispielsweise Knöpfe, Schalter oder Zierblenden, wobei hier insbesondere die isolierenden Eigenschaften des Bernstein z.B. in Hinsicht auf EMV als vorteilhaft zu nennen sind.

Die Erfindung ist nicht nur auf die zuvor geschilderte Beispiele beschränkt, sondern vielmehr auf weitere übertragbar.

### Literatur

[1] Jens Rehländer, Volker Handloik; "Bernstein" in GEO Special Ostsee, Juni 1998
[2] AT Privilegium 1879/003726
[3] JP 4010913

## Patentansprüche

1. Verfahren zur Herstellung eines Bauteils aus Bernstein,
wobei zunächst ein Halbzeug aus Bernstein hergestellt wird,
**dadurch gekennzeichnet,**
**daß** das Halbzeug in eine dreidimensionale Form umgeformt wird.

2. Verfahren nach Anspruch 1,
**dadurch gekennzeichnet,**
**daß** das Halbzeug plattenförmig hergestellt wird.

3. Verfahren nach einem der Ansprüche 1 oder 2,
**dadurch gekennzeichnet,**
**daß** das Halbzeug durch Pressen umgeformt wird.

4. Verfahren nach einem der Ansprüche 1 bis 3,
**dadurch gekennzeichnet,**
**daß** das Halbzeug und/oder das Umformwerkzeug vor und/oder während dem Umformvorgang erwärmt wird.

5. Verfahren nach einem der Ansprüche 1 bis 4,
**dadurch gekennzeichnet,**
**daß** an das umgeformte Halbzeug mindestens ein Beleuchtungsmittel, vorzugsweise eine Luminiszenzfolie, angebracht werden.

6. Verfahren nach einem der Ansprüche 1 bis 5,
**dadurch gekennzeichnet,**
**daß** das umgeformte Halbzeug auf einen Träger aufgebracht wird.

7. Verfahren nach einem der Ansprüche 1 bis 6,
**dadurch gekennzeichnet,**
**daß** das umgeformte Halbzeug auf einen Träger kaschiert wird.

8. Verfahren nach einem der Ansprüche 6 oder 7,
**dadurch gekennzeichnet,**
**daß** als Träger eine Trägerfolie verwendet wird.

9. Verfahren nach einem der Ansprüche 1 bis 8,
**dadurch gekennzeichnet,**
**daß** das umgeformte Halbzeug zumindest partiell lackiert wird.

10. Bauteil aus Bernstein,
**dadurch gekennzeichnet,**
**daß** es nach einem Verfahren gemäß einem der Ansprüche 1 bis 9 hergestellt wurde.

11. Bauteil eines Fahrzeuges,
**dadurch gekennzeichnet,**
**daß** es oder mindestens ein Teil davon aus Bernstein besteht und es oder der Teil nach einem Verfahren gemäß einem der Ansprüche 1 bis 9 hergestellt wurde.
